# EUROPEAN PATENT APPLICATION

(11) **EP 4 674 736 A1**
(43) Date of publication of application: **07.01.2026**
(21) Application number: 25179604.1
(22) Date of filing: 28.05.2025
(51) Int. Cl.: B62J 1/08, B62K 19/36, F16B 2/10, F16B 7/14

(54) **QUICK-RELEASE SEAT POST CLAMP FOR ATTACHING A SADDLE TO THE SEAT TUBE OF A BICYCLE FRAME**

(30) Priority: 05.07.2024 IT 202400015589
(71) Applicant: Ursus S.P.A., 36027 Rosa' VI (IT)
(72) Inventor: FERRONATO, Sergio, 36027 ROSÀ (VI) (IT); FERRONATO, Simone, 36027 ROSÀ (VI) (IT)
(74) Representative: Marchioro, Paolo

(57) **Abstract**

Clamp (1, 100) for attaching a saddle (S) to the seat tube (TS) of a frame (T) of a bicycle (B), of the type comprising a clamping ring (2, 102), a locking rod (3, 103) arranged in such a way that it passes through said clamping ring (2, 102) and provided with two locking elements (4, 5, 104, 105), and a hand lever (6, 106) configured so that, when rotated, it causes the two free ends (2a, 2b, 102a, 102b) of the clamping ring (2, 102) to be moved closer to each other. In said clamp (1, 100) the hand lever (6, 106) is configured to rotate around the axis (X) defined by the locking rod (3, 103) and during rotation is integrally associated with at least one of the two locking elements (4, 5, 104, 105), so that the rotation of the hand lever (6, 106) also sets that locking element (4, 5, 104, 105) rotating. Furthermore, in the clamp (1, 100) a first one of the two locking elements (4, 5, 104, 105) is integral with the locking rod (3, 103) while the second one of the two locking elements (4, 5, 104, 105) is configured so that its relative position with respect to the locking rod (3, 103) can be changed in such a way as to define a fine adjustment system (8, 108) configured to allow the fine adjustment of the distance between the two ends (2a, 2b, 102a, 102b) of the clamping ring (2, 102) to be carried out, even while the hand lever (6, 106) is kept at rest.

## Description

The present invention concerns a clamp, in particular a quick-release seat post clamp particularly suitable for attaching a saddle to the seat tube of a bicycle frame.

It is known that quick-release seat post clamps are used, especially in the field of bike rental, to make it easy to adjust the height of a bicycle saddle. For this purpose, quick-release seat post clamps are positioned in the connection between the saddle and the seat tube of a bicycle frame.

Furthermore, it is known that similar clamps are also used for attaching the handlebars of a bicycle to the head tube of the frame of the same bicycle.

A common quick-release seat post clamp comprises a clamping ring, a hand lever and a locking rod. The locking rod is inserted through two through holes present at both ends of the clamping ring.

The hand lever is configured in such a way that, when rotated in a first rotation direction from a release position to a clamping position, it moves the two free ends of the clamping ring closer to each other and consequently reduces the radius of the clamping ring itself, so as to define a configuration in which the saddle is attached to the seat tube of the bike frame.

However, the quick-release seat post clamps of the known art, while appreciated, have certain drawbacks, which are described here below.

First of all, some types of seat post clamps known in the art, although defined as quick-release clamps, actually are not so easy to use, even by the most inexperienced users, especially when it comes to switching from the clamping position to the release position.

In addition, sometimes the seat post clamps known in the art, although arranged in the clamping position so as to lock the saddle to the seat tube of the bike frame, disadvantageously have a slack and thus cannot actually lock the saddle itself to the seat tube as required, which makes it impossible to use the bike. The present invention intends to overcome the drawbacks found in the known art.

In particular, it is the object of the invention to provide a seat post clamp that is easy to handle and user-friendly.

At the same time, it is the object of the invention to provide a sturdy and reliable seat post clamp.

Furthermore, it is the object of the invention to provide a seat post clamp that can be finely adjusted so as to guarantee the reliability of the connection for different types of saddles and seat posts, or for different types of handlebars and head tubes, and in such a way as to guarantee said reliability over time.

The task and the objects mentioned above are fulfilled by a clamp, more specifically a seat post clamp, according to claim 1.

Further characteristics of the seat post clamp according to claim 1 are described in the dependent claims.

The task and the above-mentioned objects, together with the advantages that will be mentioned below, are highlighted in the description of two embodiments of the invention which are provided by way of non-limiting example, with reference to the attached drawings, wherein:
- Figure 1 shows an axonometric view of a first embodiment of the seat post clamp that is the subject of the invention;
- Figure 2 shows a front view of the seat post clamp shown in Figure 1;
- Figure 3 shows a side view of the seat post clamp shown in Figure 1;
- Figure 4 shows a top view of the seat post clamp shown in Figure 1;
- Figure 5 shows an exploded front view of the seat post clamp shown in Figure 1;
- Figure 6 shows an exploded axonometric view of the seat post clamp shown in Figure 1;
- Figure 7 shows an exploded top view of the seat post clamp shown in Figure 1;
- Figure 8 shows a detailed view of the locking rod of the seat post clamp shown in Figure 1;
- Figure 9 shows a first detailed view of the clamping ring and the cam system of the seat post clamp shown in Figure 1;
- Figure 10 shows a second detailed view of the clamping ring and the cam system of the seat post clamp shown in Figure 1;
- Figure 11 shows a first detailed view of the fine adjustment system of the seat post clamp shown in Figure 1;
- Figure 12 shows a second detailed view of the fine adjustment system of the seat post clamp shown in Figure 1;
- Figure 13 shows a further detailed view of the clamping ring and the cam system of the seat post clamp shown in Figure 1;
- Figure 14 shows a detailed top view of the hand lever of the seat post clamp shown in Figure 1;
- Figure 15 shows a detailed side view of the hand lever of the seat post clamp shown in Figure 1;
- Figure 16 shows a detailed side view of the hand lever and the counter cam of the seat post clamp shown in Figure 1;
- Figures 17a and 17b show two sectional views of the seat post clamp of Figure 1, respectively in the release position and in the clamping position;
- Figure 18 shows an axonometric view of the clamping ring of the seat post clamp of Figure 1;
- Figures 19 and 20 show two axonometric views of the seat post clamp of Figure 1 applied to a seat tube of a bicycle frame, respectively in the release position and in the clamping position;
- Figure 21 shows an axonometric view of a second embodiment of the seat post clamp of the invention;

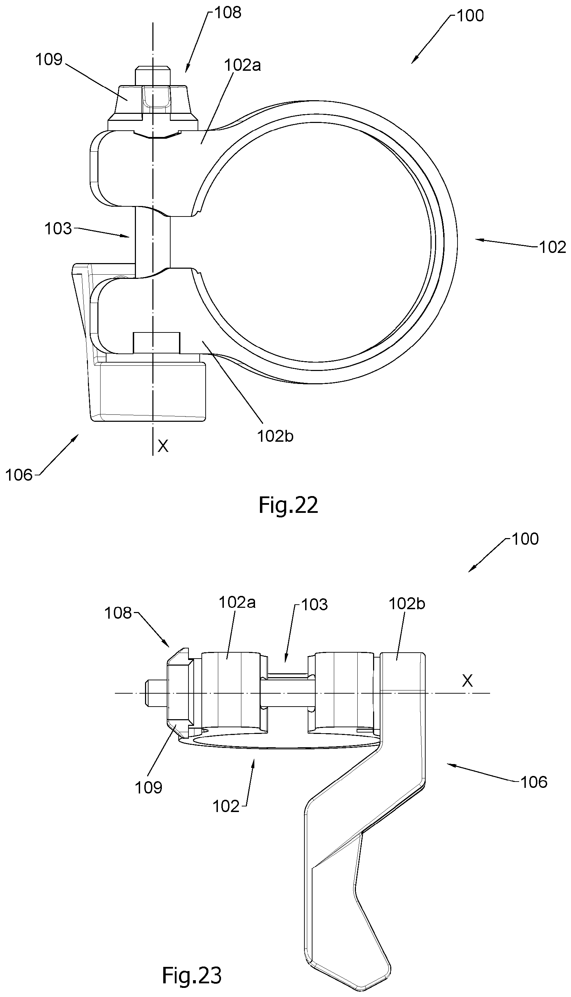

- Figure 22 shows a top view of the seat post clamp shown in Figure 21;
- Figure 23 shows a front view of the seat post clamp shown in Figure 21;
- Figure 24 shows an exploded front view of the seat post clamp shown in Figure 21;
- Figure 25 shows an exploded axonometric view of the seat post clamp shown in Figure 21;
- Figure 26 shows a first detailed view of the clamping ring and the fine adjustment system of the seat post clamp shown in Figure 21;
- Figure 27 shows a second detailed view of the clamping ring and the fine adjustment system of the seat post clamp shown in Figure 21;
- Figure 28 shows an axonometric view of the elements that make up the fine adjustment system of the seat post clamp shown in Figure 21;
- Figure 29 shows a first detailed view of the clamping ring and the cam system of the seat post clamp shown in Figure 21;
- Figure 30 shows a second detailed view of the clamping ring and the cam system of the seat post clamp shown in Figure 21;
- Figure 31 shows an axonometric view of the seat post clamp of Figure 21 applied to the seat tube of a bicycle frame.

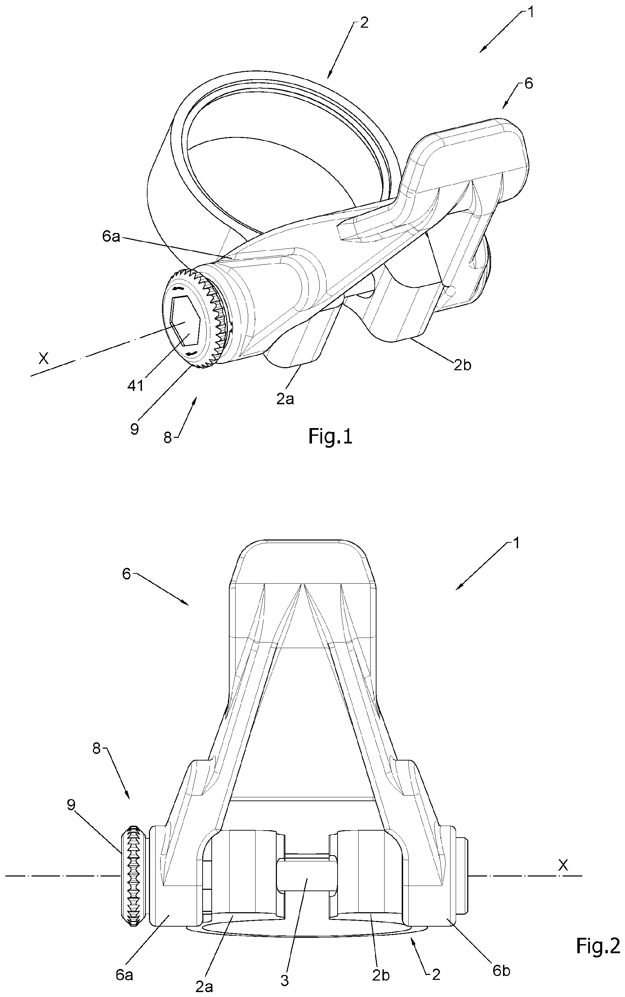

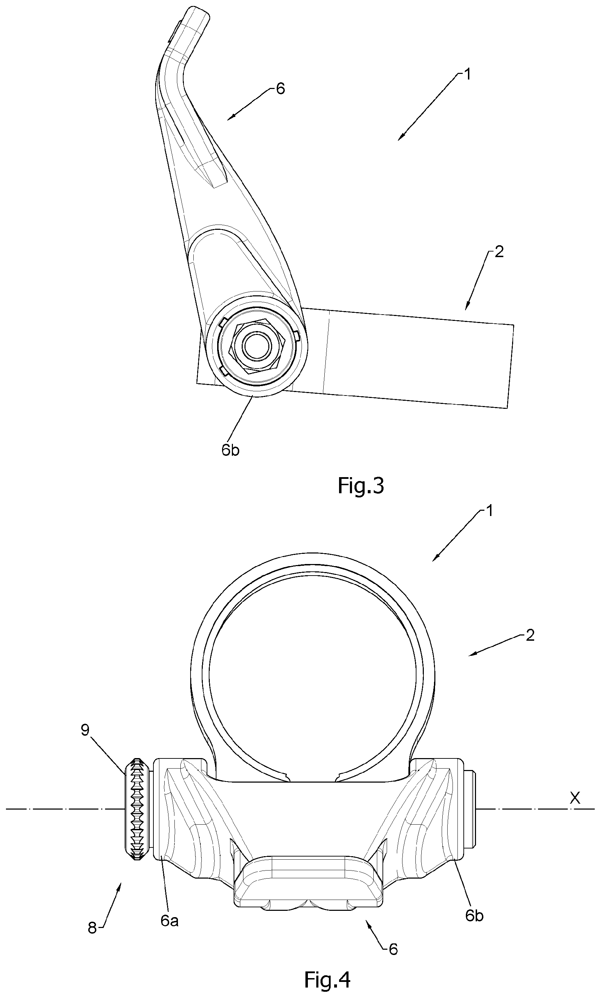

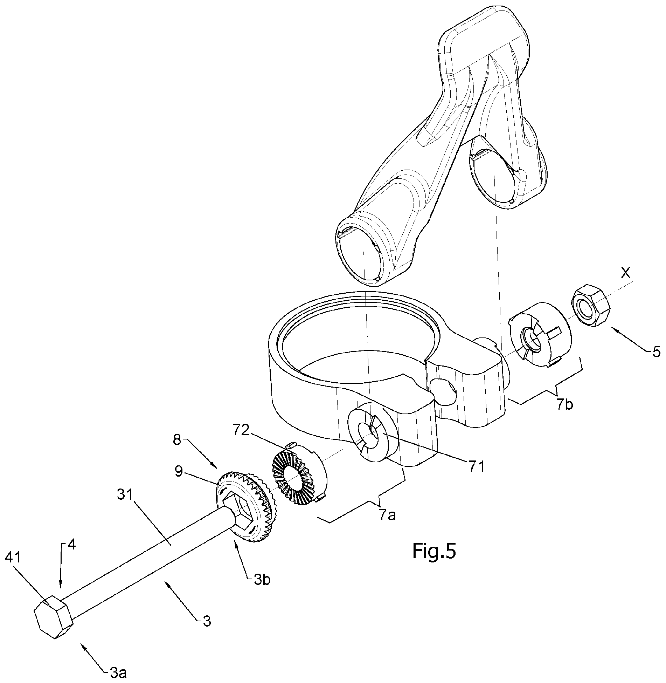

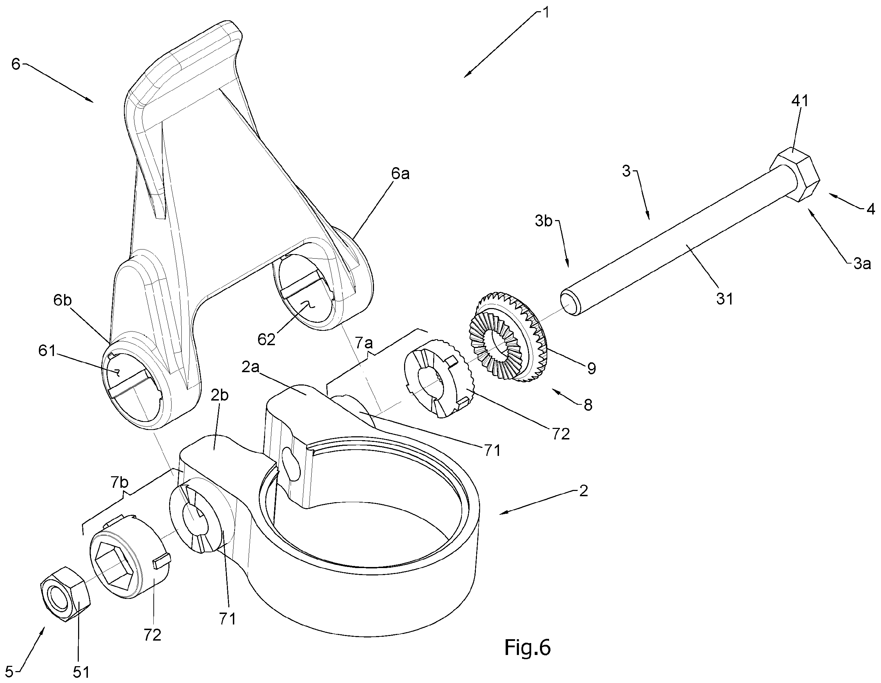

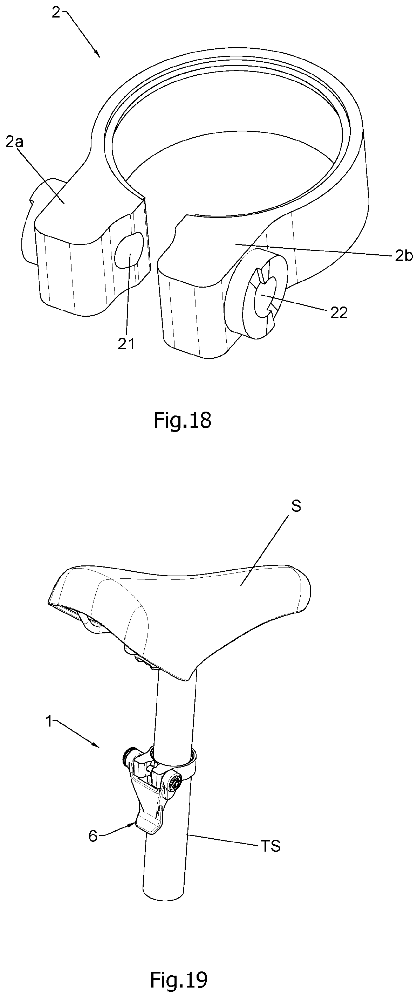

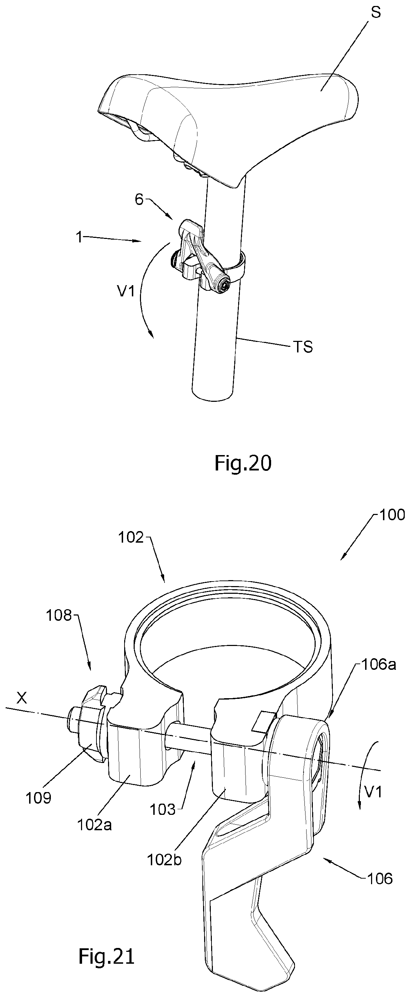

The clamp, more specifically the seat post clamp, particularly suitable for attaching a saddle **S** to the seat tube **TS** of a frame **T** of a bicycle, according to a first preferred embodiment, is shown in Figures 1 to 7 alone and in Figures 19 and 20 applied to said seat tube **TS**, wherein it is indicated as a whole by **1.**

It should be noted that said seat post clamp **1** of the invention is also to be considered suited to be used to attach the handlebars to the head tube of a bicycle frame or to secure any connection of two tubes inserted into each other. According to said first preferred embodiment, said seat post clamp **1** comprises a clamping ring **2** provided at its free ends **2a** and **2b** with two through holes **21** and **22** facing each other, as can be seen in Figure 18.

Said seat post clamp **1** of the invention also comprises a locking rod **3** arranged in such a way that it passes through said two through holes **21** and **22,** wherein said locking rod **3** is provided, at its two ends **3a** and **3b,** with two locking elements **4** and **5** designed to prevent the locking rod **3** from sliding out of the through holes **21** and **22** of the clamping ring **2.**

Additionally, the seat post clamp **1** comprises a hand lever **6** configured in such a way that, when rotated according to a first rotation direction **V1** from a release position, shown in Figure 20, to a clamping position, shown in Figure 19, it moves the two free ends **2a** and **2b** of the clamping ring **2** closer to each other and reduces the radius of the clamping ring **2** itself, so as to define a configuration in which the saddle **S** is attached to the seat tube **TS** of the bicycle frame.

According to the invention, the hand lever **6** is configured to rotate around the axis **X** defined by the locking rod **3.**

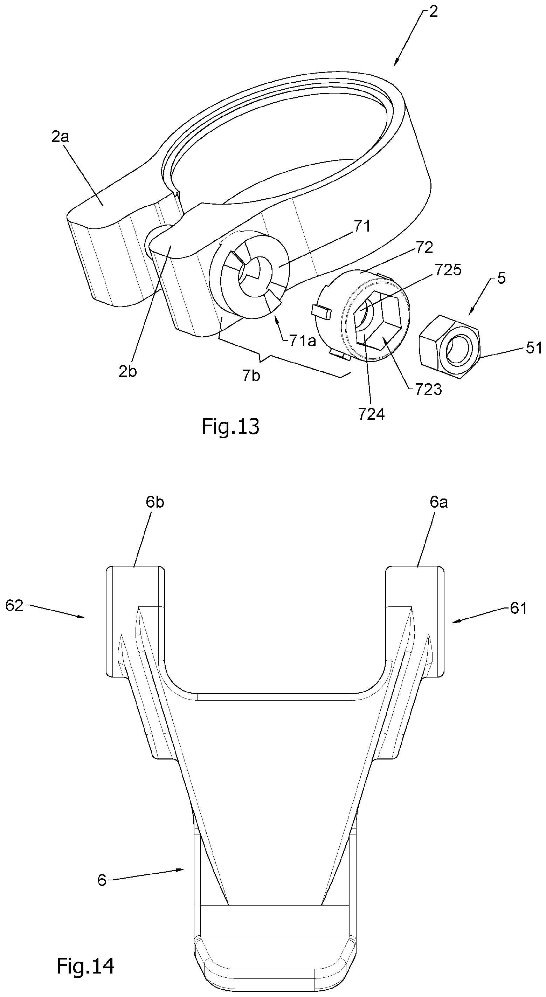

Furthermore, according to the above-mentioned first preferred embodiment of the invention, as can be seen in Figure 14, the hand lever **6** is C-shaped and during rotation is integrally associated, at its free ends **6a** and **6b,** with both said locking elements **4** and **5** of said locking rod **3,** so that the rotation of the hand lever **6** also sets the two locking elements **4** and **5** and the locking rod **3** rotating. Furthermore, again according to said first preferred embodiment, a cam system **7a** and **7b** is arranged between each of the two free ends **6a** and **6b** of the hand lever **6** and the corresponding free end **2a** and **2b** of the clamping ring **2,** and it is configured to cause the two free ends **2a** and **2b** of the clamping ring **2** to be moved closer to or away from each other, when the hand lever **6** is rotated from said release position to the clamping position, and vice versa.

However, it is not excluded that, according to a variant embodiment of the seat post clamp **1** of the invention and differently from the above-mentioned first preferred embodiment, only one cam system may be arranged between only one of the free ends **6a** or **6b** of the hand lever **6** and the corresponding free end **2a** or **2b** of the clamping ring **2.**

Returning to said first preferred embodiment of the invention, preferably but not necessarily, each of the cam systems **7a** and **7b** comprises a cam **71** integrally coupled with the free end **2a** and **2b** of the clamping ring **2** and a counter cam **72** integrally coupled with the locking element **4** and **5,** which in turn during rotation is integrally coupled with the free end **6a** and **6b** of the hand lever **6.** Incidentally, in this context the expression "integrally coupled" means that, when the clamp of the invention is mounted, the various elements that are integrally coupled together cannot change their relative position (rotation and translation). The expression "integrally coupled during rotation" means that said components, integrally coupled together during rotation, rotate together but can translate with respect to each other, as specifically explained below.

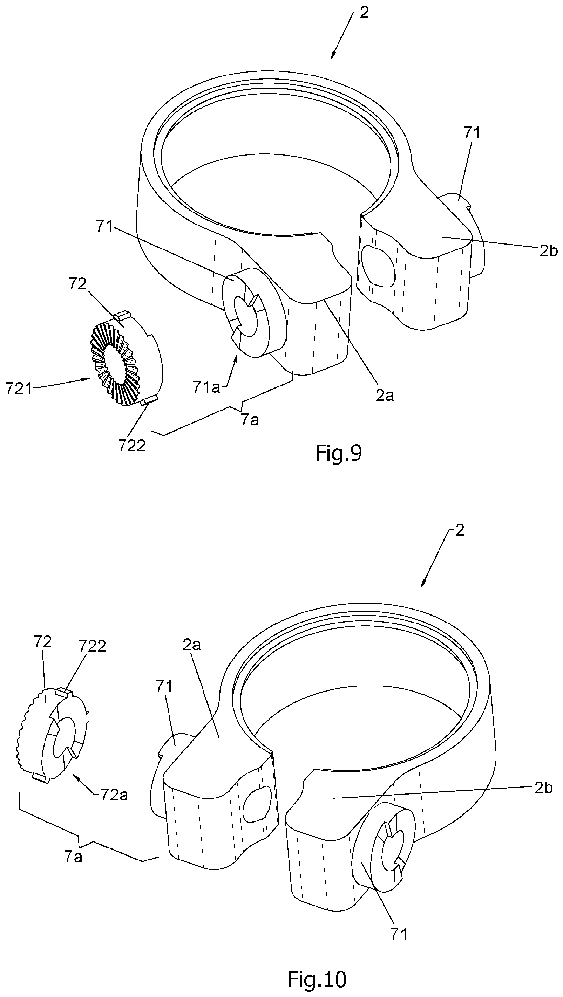

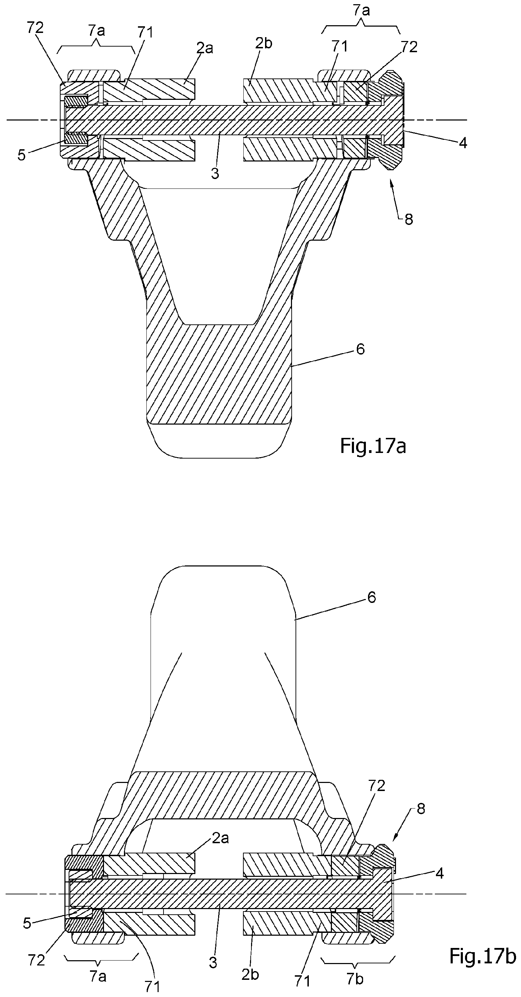

Furthermore, as can be seen in Figures 9, 10 and 13, the surfaces of each of the sides **71a** and **72a** facing each other of the cam **71** and the counter cam **72** are inclined, in such a way that the relative rotation of the counter cam **72** with respect to the cam **71** causes a change in their total extension along said axis **X** and, consequently, causes the two free ends **2a** and **2b** of the clamping ring **2** to be moved closer to or away from each other, as shown in the sectional views of Figures 17a and 17b.

It is not excluded, however, that said cam **71** and said counter cam **72** may be configured in a manner different from what has just been described, provided that their relative rotation results in a change in their total extension along said axis **X.**

In other words, said cam **71** and said counter cam **72** can be configured in any known manner, provided that they can transform a rotational motion into a linear translation along the axis **X.**

Such a combination of features of the seat post clamp **1** of the invention described above advantageously makes it possible to obtain a clamp that is sturdier, more reliable and easier to use than the seat post clamps known in the art.

Additionally, the counter cam **72** and the corresponding locking element **4** and **5** are configured to translate along said axis **X** with respect to the hand lever **6,** in the manner and in view of the advantages that are clarified below.

According to said first preferred embodiment of the invention, a further aspect of the seat post clamp **1** lies in that a first one of the two locking elements **4** or **5** is integral with the locking rod **3,** while the second one of the two locking elements **4** or **5** is configured so that its relative position with respect to the locking rod **3** along the axis **X** can be changed in such a way as to define a fine adjustment system **8** configured to allow the fine adjustment of the distance between the two locking elements **4** and **5** and consequently the fine adjustment of the distance between the two ends **2a** and **2b** of the clamping ring **2** to be carried out, even while said hand lever **6** is kept at rest.

In fact, it is evident that the distance between the two locking elements **4** and **5** affects the distance between the two free ends **2a** and **2b** of the clamping ring **2** for any static position assumed by the hand lever **6** between the release position and the clamping position of the seat post clamp **1** of the invention.

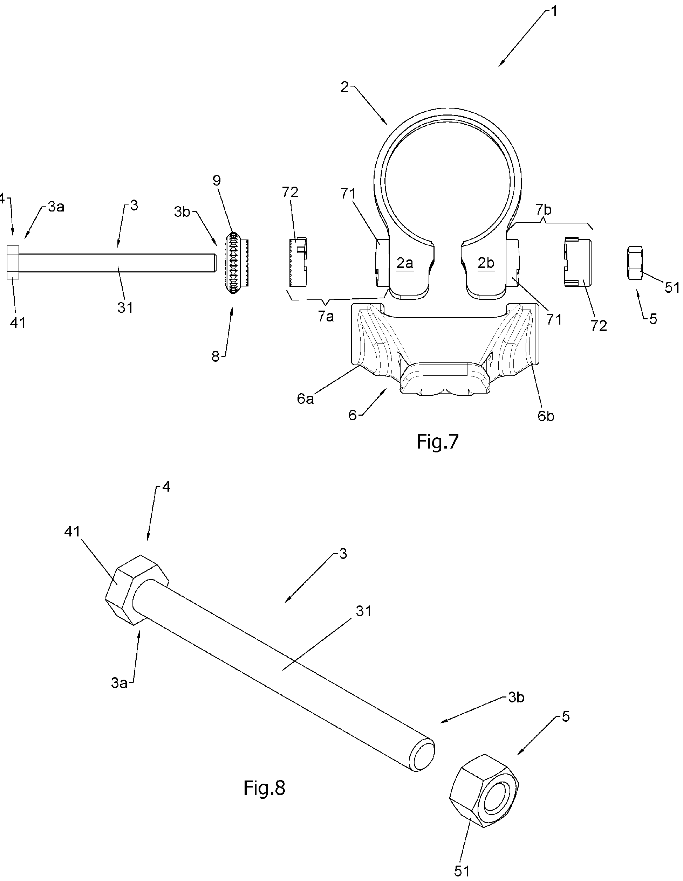

Preferably but not necessarily, as shown in Figure 8, the locking rod **3** is a bolt **31,** the first locking element **4** integral with the locking rod **3** is the head **41** of the bolt **31,** and the second locking element **5,** configured so that its relative position with respect to the locking rod **3** itself can be changed, is the nut **51** of the bolt **31.**

Therefore, the above-mentioned change in the position of the second locking element **5** with respect to the locking rod **3** along the axis **X** of the locking rod **3** is obtained by screwing or unscrewing the nut **51** and the bolt **31** relative to each other.

In addition, according to the preferred embodiment of the invention, the head **41** and the nut **51** have a prismatic shape.

Alternatively, the head **41** and the nut **51** may have any other non-circular shape for the reasons that are explained below.

Again, according to said first preferred embodiment of the invention, said fine adjustment system **8** comprises an ergonomic knob **9** integrally coupled with one of the two locking elements **4** or **5** in such a way as to make it easier for a user to change the relative position between the second locking element **5** and the locking rod **3,** along the axis **X** of the locking rod **3. In** particular, the presence of said ergonomic knob **9** allows a user to carry out said change without the aid of a special tool.

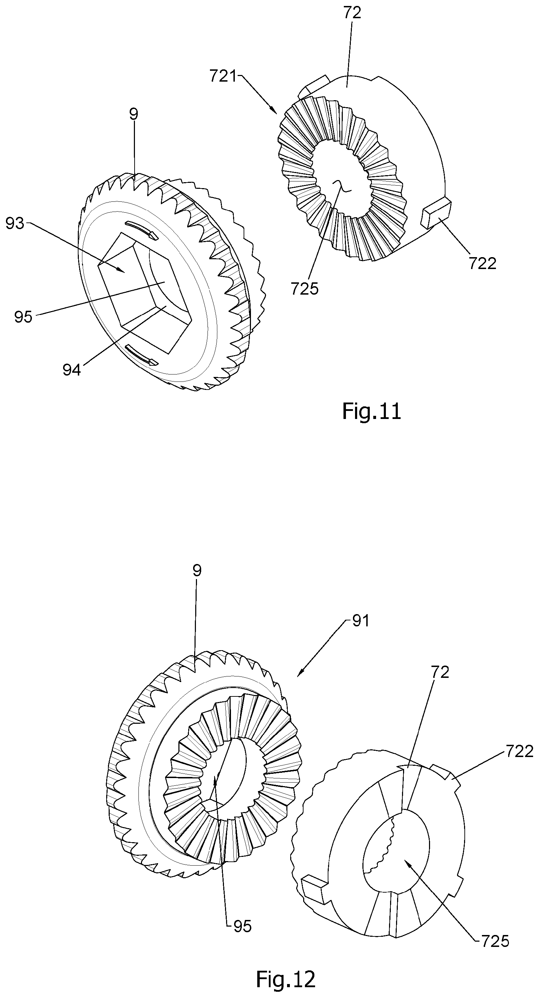

To allow the locking element **4** and **5,** to which the ergonomic knob **9** is integrally coupled, to be integrally coupled during rotation with the hand lever **6** when the same hand lever **6** is set rotating, in order to release or to attach the saddle **S** from/to the seat tube **TS,** and at the same time to allow the same locking element **4** and **5** to rotate, so that said fine adjustment can be carried out, while the hand lever **6** is kept at rest, the ergonomic knob **9** comprises first locking means **91** configured to cooperate with second locking means **721** defined, in the case of the preferred embodiment of the invention, on one of said counter cams **72.** Said first and second locking means are visible in Figures 11 and 12.

In particular, said first locking means **91** and the corresponding second locking means **721** are defined on the two opposing surfaces of the ergonomic knob **9** and of the counter cam **72** by means of complementary radial serrations that make it possible, on the one hand, to obtain the integral rotation of the hand lever **6,** the counter cam **72,** the ergonomic knob **9** and the corresponding locking element **4** or **5,** when the rotation is transmitted through the same hand lever **6,** and, on the other hand, to permit the discrete rotation of the ergonomic knob **9** and the corresponding locking element **4** or **5** with respect to the hand lever **6** and the counter cam **72,** in such a way as to carry out said fine adjustment operation.

It is not excluded that, in another embodiment representing an alternative to the preferred embodiment of the invention, in which there is only one cam system, said ergonomic knob **9** may be associated with the locking element **4** or **5** arranged on the opposite side with respect to said cam system. In this case, therefore, the second locking means are no longer defined on the counter cam **72,** but on the free end of the hand lever **6** itself.

Going back to the first preferred embodiment of the seat post clamp **1** of the invention, and in particular to the fact that the counter cam **72** and the corresponding locking element **4** or **5** are configured to translate relative to the hand lever **6** along said axis **X,** said special feature is obtained as described below.

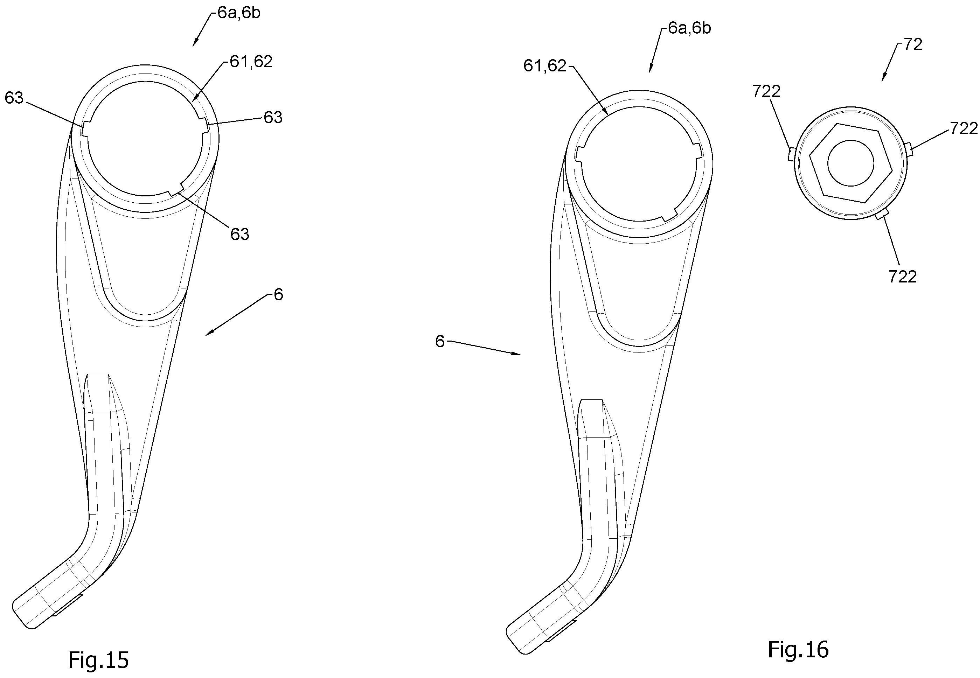

The two free ends **6a** and **6b** of the hand lever **6** are provided with two through seats **61** and **62,** preferably circular in shape, as can be seen in Figure 15, in turn having at least one slit **63** undercut in the direction of the axis **X.** Preferably, but not necessarily, in the first preferred embodiment of the invention there are three of such slits **63** angularly distributed along the circumference of said through seats **61** and **62.**

The counter cam **72** of each cam system **7a** and **7b,** in turn, has a circular outer contour that is complementary to the shape of said two through seats **61** and **62.** In addition, on the outer contour of said counter cam **72** there are three projections **722** that extend according to extension axes parallel to the axis **X** and are complementary to said slits **63,** as can be seen in Figure 16, in such a way that the insertion of each counter cam **72** into the corresponding through seat **61** and **62** determines an integral coupling between the hand lever **6** and the counter cam **72** during rotation, and at the same time allows the counter cam **72** to translate along the axis **X** with respect to the corresponding through seat **61** and **62.**

It is not excluded, however, that both the through seats **61** and **62** and the outer contours of the counter cams **72** may be shaped in such a way that, when each counter cam **72** is inserted in the corresponding through seat **61** and **62,** said elements are integral with each other during rotation, but can translate along the axis **X** with respect to each other.

Furthermore, according to the first preferred embodiment of the invention, the counter cam **72** of the cam system **7b** arranged on the opposite side of the fine adjustment system **8,** that is, on the opposite side of the ergonomic knob **9,** has, as shown in Figure 13, a seat **723** configured to accommodate and lock one of the two locking elements **4** or **5** during rotation. According to the preferred embodiment of the invention, said seat **723** has a prismatic shape that is complementary to that of the head **41** of the bolt **31** or to that of the nut **51** of the bolt **31.**

It is not excluded, however, that the seat **723,** the head **41** and the nut **51** may be shaped in such a way that, when the head **41** or the nut **51** are inserted in said seat **723,** the two coupled elements are integral with each other during rotation.

In addition, said counter cam **72** has a stop side **724** designed to counteract the corresponding locking element **4** or **5** inserted in said seat **723.** Said stop side **724** is necessarily provided with a central hole **725** that allows the locking rod 3 to pass therethrough.

According to the first preferred embodiment of the invention described herein, said seat **723** accommodates the nut **51** of the bolt **31.**

Similarly, the integral coupling between the ergonomic knob **9** and the other one of the two locking elements **4** or **5** is obtained, as can be seen in Figure 11, by defining on the same ergonomic knob **9** a seat **93** configured to accommodate the corresponding locking element **4.**

Also in this case, specifically, said seat **93** has a prismatic shape complementary to the shape of the head **41** of the bolt **31** or to the shape of the nut **51** of the bolt **31.**

Also in this case, however, it is not excluded, that the seat **93,** the head **41** and the nut **51** may be shaped in such a way that, when the head **41** or the nut **51** are inserted in said seat **93,** the two coupled elements are integral with each other during rotation.

According to the first preferred embodiment of the invention described herein, said seat accommodates the head **41** of the bolt **31.**

Furthermore, said ergonomic knob **9** has a stop side **94** designed to counteract the corresponding locking element **4** or **5** inserted in said seat **93.** Said stop side **94** is necessarily provided with a central hole **95** that allows the locking rod **3** to pass therethrough. The counter cam **72** associated with said ergonomic knob **9** is also necessarily provided with a central hole **725** to allow the passage of the locking rod **3.**

Said combination of features described above makes it possible to obtain the advantages described here-in-below.
- If it is necessary to finely adjust the relative distance between the two free ends **2a** and **2b** of the clamping ring **2** while keeping the hand lever **6** at rest, the user, by operating the ergonomic knob **9,** more specifically by turning said ergonomic knob **9,** sets the locking rod **3** and the second locking element **5** rotating relative to each other, thereby changing the distance between said two locking elements **4** and **5** along the axis **X.** Said change then results in a change in the distance between the two counter cams **72.** More specifically, as the ergonomic knob **9** is operated in such a way as to screw the nut **51** on the bolt **31,** the nut **51** itself and the head **41** force the two counter cams **72** to move closer to each other along the axis X and these in turn push the cams **71** closer together. Said cams **71,** being integral with the clamping ring **2,** force the two free ends **2a** and **2b** of the same clamping ring **2** to move closer to each other. By operating the ergonomic knob **9** in the opposite direction, the nut **51** is unscrewed from the bolt **31** and, according to what has just been explained above, the two free ends **2a** and **2b** of the same clamping ring **2** are moved away from each other. All this while keeping the hand lever **6** at rest and, in addition, without generating any thrusting action on the same hand lever **6** along the axis **X,** thanks precisely to the fact that the counter cams **72** can translate with respect to the hand lever **6** along the axis **X** itself. This, advantageously, prevents the hand lever **6** from being inconveniently deformed, while at the same time it is possible to finely adjust the distance between the two free ends **2a** and **2b** of the clamping ring **2** itself.
- According to what has been explained above, once the static position of the free ends **2a** and **2b** has been appropriately adjusted, by turning the hand lever **6** it is possible to switch from a configuration in which the saddle **S** is released from the seat tube **TS** to a configuration in which it is clamped on the latter, and vice versa.

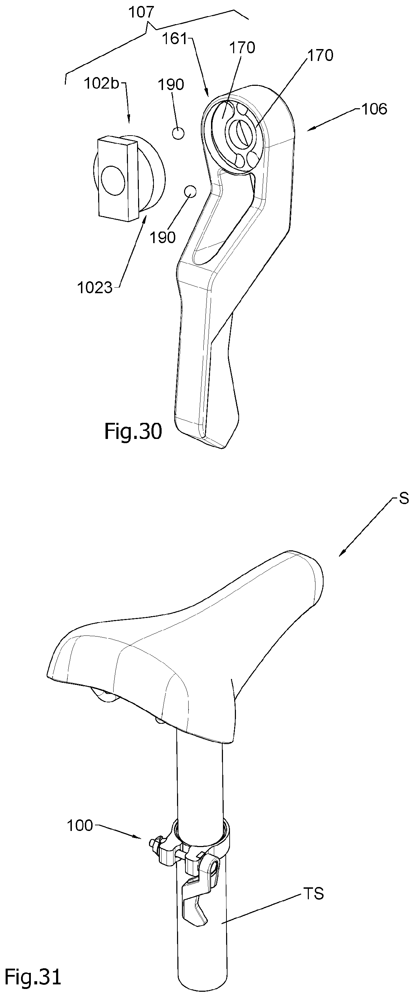

Turning now to the description of a second preferred embodiment of the seat post clamp that is the subject of the invention, it is shown alone in Figures from 21 to 25 and applied to the above-mentioned seat tube **TS** in Figure 31, wherein it is indicated as a whole by **100.**

Also according to said second preferred embodiment of the invention, the seat post clamp **100** comprises a clamping ring **102** provided at its free ends **102a** and **102b** with two through holes **1021** and **1022,** facing each other.

Said seat post clamp **100** of the invention also comprises a locking rod **103** arranged in such a way that it passes through said two through holes **1021** and **1022,** wherein said locking rod **103** is provided, at its two ends **103a** and **103b,** with two locking elements **104** and **105** designed to prevent the locking rod **103** from sliding out of the through holes **1021** and **1022** of the clamping ring **102.** Additionally, the seat post clamp **100** comprises a hand lever **106** configured in such a way that, when rotated in a first rotation direction **V1** from a release position to a clamping position, it moves the two free ends **102a** and **102b** of the clamping ring **102** closer to each other and reduces the radius of the clamping ring **102** itself, so as to define a configuration in which the saddle S is attached to the seat tube **TS** of the frame of the bicycle.

According to the invention, the hand lever **106** is configured to rotate around the axis **X** defined by the locking rod **103.**

Furthermore, according to said second preferred embodiment of the invention, during rotation the hand lever **106** is integrally associated, at one free end **106a** thereof, with only one of the two locking elements **104** of said locking rod **103,** so that the rotation of the hand lever **106** also sets said locking element **104** rotating.

In said second preferred embodiment of the invention, the other one of the two locking elements **105** is configured to remain at rest during the rotation of the hand lever **106,** in such a way as to allow the distance between the two locking elements **104** and **105** and, consequently, the distance between the two ends **102a** and **102b** of the clamping ring **102** to be changed.

For this to be possible, a first one of the two locking elements **104 or 105** must be integral with the locking rod **103,** while the second one of the two locking elements **104 or 105** must be configured in such a way that its relative position with respect to the locking rod **103** along the axis **X** can be changed. Furthermore, said characteristic makes it possible to define a fine adjustment system **108** configured to allow the fine adjustment of the distance between the two locking elements **104** and **105** and, consequently, the fine adjustment of the distance between the two ends **102a** and **102b** of the clamping ring **102** to be carried out, even while said hand lever **106** is kept at rest.

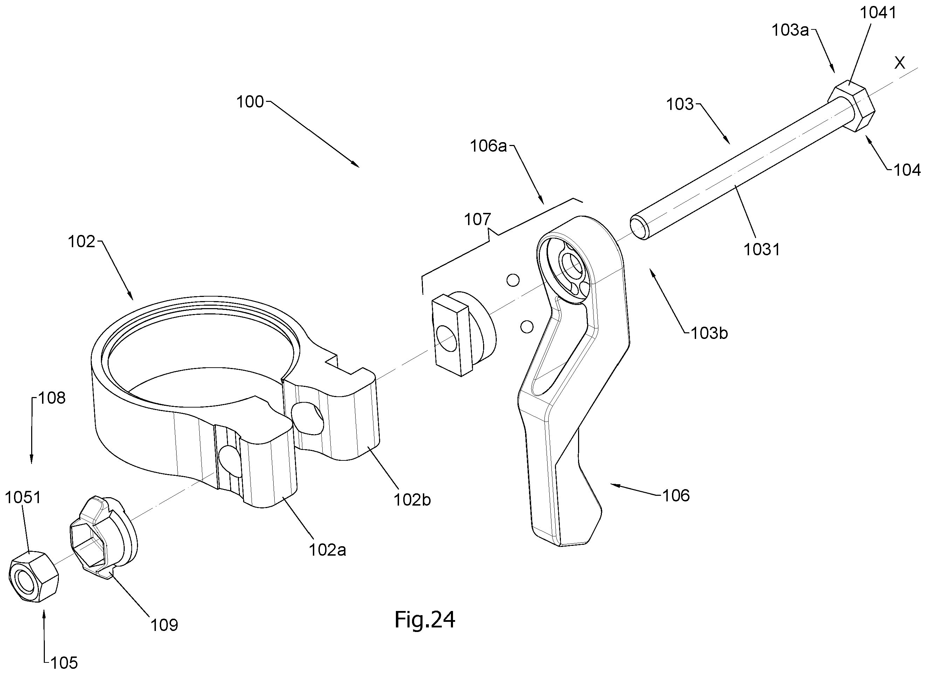

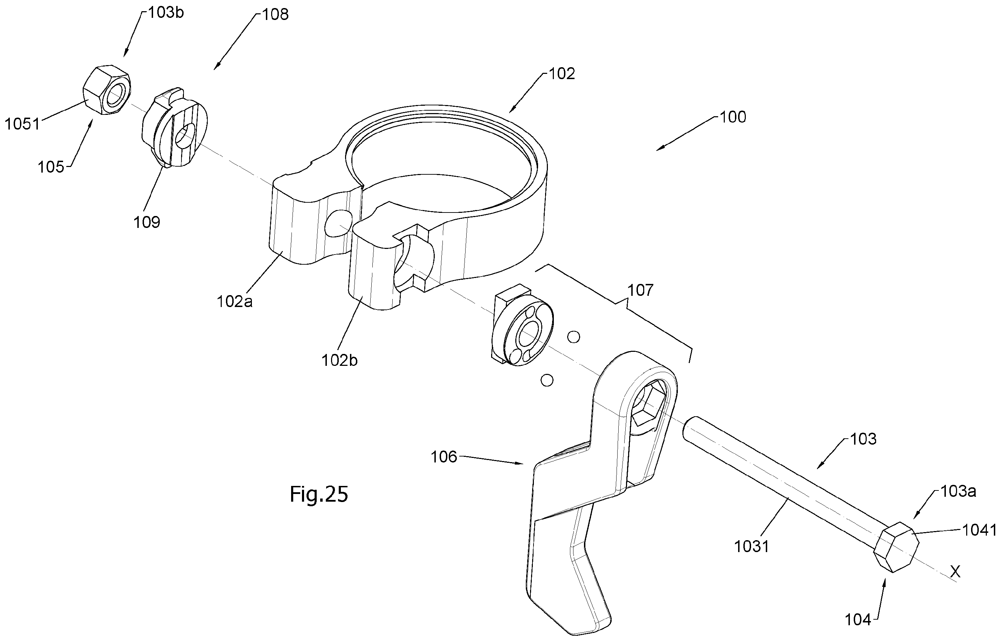

In fact, it is evident that the distance between the two locking elements **104** and **105** affects the distance between the two free ends **102a** and **102b** of the clamping ring **102** for any position of the hand lever **106** between the release position and the clamping position of the seat post clamp **100** of the invention. Preferably but not necessarily, as shown in Figures 24 and 25, the locking rod **103** is a bolt **1031,** the first locking element **104** integral with the locking rod **103** is the head **1041** of the bolt **1031,** and the second locking element **105,** configured so that its relative position with respect to the locking rod 103 itself can be changed, is the nut **1051** of the bolt **1031.**

Therefore, the above-mentioned change in the position of the second one of the two locking elements **104** and **105** with respect to the locking rod **103** along the axis **X** of the locking rod **103** is obtained by screwing or unscrewing the nut **1051** and the bolt **1031** relative to each other.

In addition, according to the preferred embodiment of the invention, the head **1041** and the nut **1051** have a prismatic shape.

Alternatively, the head **1041** and the nut **1051** may have any other non-circular shape for the reasons that are explained below.

Furthermore, another characterizing aspect of said second preferred embodiment of the invention, which makes it possible to carry out both the fine adjustment of the seat post clamp **100** and the switch from the release position to the clamping position of the seat post clamp **100** itself, lies in that it comprises an ergonomic knob **109** integrally coupled with the locking element **105** that is not integrally coupled with the hand lever **106** during rotation.

According to said second preferred embodiment of the invention, said ergonomic knob **109** is integrally coupled with said second locking element **105,** while the hand lever **106** is integrally coupled with the first locking element **104** during rotation. It is not excluded, however, that according to a variant of said second preferred embodiment of the invention the ergonomic knob **109** may be integrally coupled with the first locking element **104,** while the hand lever **106** may be integrally associated with the second locking element **105** during rotation.

In any case, furthermore, the ergonomic knob **109** comprises first locking means **191** reversible with respect to second locking means **1721** defined on one end **102a** of the clamping ring **102,** so as to keep at rest the locking element **105,** with which the ergonomic knob **109** itself is associated, during the rotation of said hand lever **106,** and also in such a way as to allow the ergonomic knob **109** to be rotated integrally with the corresponding locking element **105** with which it is associated, while the hand lever **106** is kept at rest so as to carry out said fine adjustment.

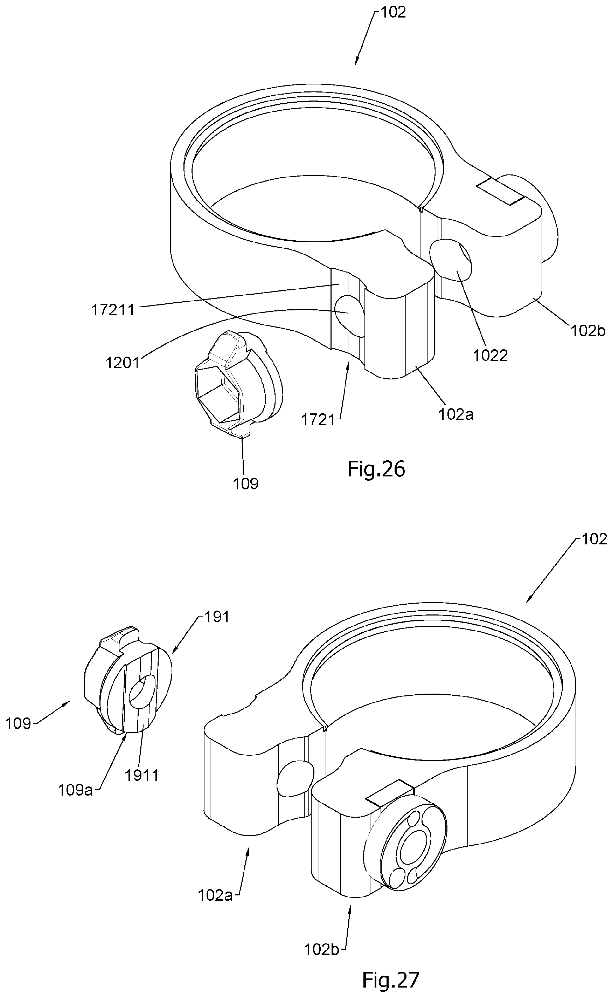

According to said second preferred embodiment of the invention, the first locking means **191** comprise a projection **1911** protruding from the surface **109a** of the ergonomic knob **109** which faces the clamping ring **102,** as shown in Figure 27. The second locking means **1721** comprise a housing **17211** defined on the surface of the clamping ring **102** facing said ergonomic knob **109,** as can be seen in Figure 26, wherein said housing **17211** is configured to accommodate said projection **1911** at a precise angular position of the ergonomic knob **109** itself with respect to the clamping ring **102,** as can be seen, for example, in Figure 21.

In this way, when said coupling is obtained, the ergonomic knob **109** and the corresponding locking element **105** associated with it are locked during rotation, when the hand lever **106** is rotated.

In order to perform, instead, the fine adjustment of the seat post clamp **100** of the invention, a user can turn the ergonomic knob **109** to allow said projection **1911** to protrude from the housing **17211** and, keeping the hand lever **106** at rest, the same user can change the distance between the two locking elements **104** and **105** and, consequently, the distance between the two ends **102a** and **102b** of the clamping ring **102.**

In addition, according to said second preferred embodiment of the invention, to further reduce the distance between the two free ends **102a** and **102b** of the clamping ring **102** during the rotation of the hand lever **106** from the release position to the clamping position, there is a cam system **107** between the hand lever **106** itself and the free end **102b** of the clamping ring **102.**

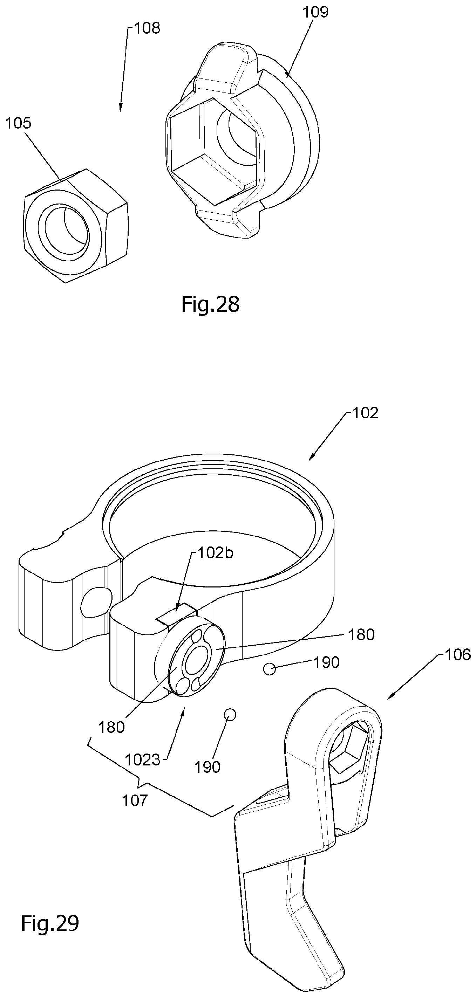

In particular, as shown in Figures 29 e 30, in said cam system **107** the facing sides **161** and **1023** of the hand lever **106** and of the free end **102b** of the clamping ring **102,** respectively, are shaped in such a way as to form at least one curved recess **170** and one curved counter recess **180,** each having a variable depth along its extension. The pair formed by the curved recess **170** and by the curved counter recess **180** is configured to accommodate a sphere **190.**

According to said second preferred embodiment of the invention, both the side **161** of the hand lever **106** and the side **1023** of the free end **102b** respectively comprise two curved recesses **170** and two opposing curved counter recesses **180,** as shown in said Figures 29 and 30, wherein each recess/counter recess pair accommodates a respective sphere **190.**

Said solution, meaning the variable depth of the curved recesses **170** and of the curved counter recesses **180** as well as the presence of the sphere **190** between each pair of curved recesses **170** and curved counter recesses **180,** actually makes it possible to force the two free ends **102a** and **102b** of the clamping ring **102** to move closer to each other even on the hand lever **106** side during the rotation of the same hand lever **106** from the release position to the clamping position.

It is not excluded, however, that said side **161** of the hand lever **106** and said side **1023** of the free end **102b** may be configured in a manner different from what has just been described, provided that their relative rotation results in a change in their total extension along said axis **X.**

In other words, said side **161** of the hand lever **106** and said side **1023** of the free end **102b** can be configured in any known manner, provided that they can transform a rotational motion into a linear translation along the axis **X.**

In practice, it has been shown that the invention achieves the set objects.

In particular, the object to provide a seat post clamp that is easy to handle and user-friendly has been achieved.

At the same time, the object to provide a sturdy and reliable seat post clamp has been also achieved.

Furthermore, the object to provide a seat post clamp that can be finely adjusted so as to guarantee the reliability of the connection for different types of saddles and seat posts, and in such a way as to guarantee said reliability over time has been also achieved.

## Claims

1. Clamp (1, 100) for attaching a saddle (S) to the seat tube (TS) of a frame (T) of a bicycle (B), of the type comprising:
- a clamping ring (2, 102) provided at its free ends (2a, 2b, 102a, 102b) with two through holes (21, 22, 1021, 1022) facing each other;
- a locking rod (3, 103) arranged so that it passes through said two through holes (21, 22, 1021, 1022) of said clamping ring (2, 102), said locking rod (3, 103) being provided at its two ends (3a, 3b, 103a, 103b) with two locking elements (4, 5, 104, 105) suited to prevent said locking rod (3, 103) from sliding out of said through holes (21, 22, 1021, 1022) of said clamping ring (2, 102);
- a hand lever (6, 106) configured in such a way that, when rotated in a first rotation direction (V1) from a release position to a clamping position, it moves said two free ends (2a, 2b, 102a, 102b) of said clamping ring (2, 102) closer to each other and reduces the radius of said clamping ring (2, 102) so as to define a configuration in which said saddle (S) is attached to said seat tube (TS) of said frame (T);
**characterized in that:**
- said hand lever (6, 106) is configured to rotate around the axis (X) defined by said locking rod (3, 103), said hand lever (6, 106) being integrally associated with at least one of said two locking elements (4, 5, 104, 105) of said locking rod (3, 103) during rotation, in such a way that the rotation of said hand lever (6, 106) also sets said at least one of said two locking elements (4, 5, 104, 105) rotating;
- a first of said two locking elements (4, 5, 104, 105) is integral with said locking rod (3, 103), while the second of said two locking elements (4, 5, 104, 105) is configured so that its relative position with respect to said locking rod (3, 103) along said axis (X) of said locking rod (3, 103) can be changed in such a way as to define a fine adjustment system (8, 108) configured to allow the fine adjustment of the distance between said two locking elements (4, 5, 104, 105) and, consequently, the fine adjustment of the distance between said two ends (2a, 2b, 102a, 102b) of said clamping ring (2, 102) to be carried out, even while said hand lever (6, 106) is kept at rest.

2. Clamp (1, 100) according to claim 1, **characterized in that** a cam system (7a, 7b, 107) is arranged between said hand lever (6, 106) and a free end (2a, 2b, 102a, 102b) of said clamping ring (2, 102) and it is configured to cause said two free ends (2a, 2b, 102a, 102b) of said clamping ring (2, 102) to be moved closer to or away from each other when said hand lever (6, 106) is rotated from said release position to said clamping position, and vice versa.

3. Clamp (1, 100) according to any one of the preceding claims, **characterized in that** said locking rod (3, 103) is a bolt (31, 131), said first one of said two locking elements (4, 5, 104, 105) integral with said locking rod (3, 103) is the head (41, 141) of said bolt (31, 131), and said second one of said two locking elements (4, 5, 104, 105), configured so that its relative position with respect to said locking rod (3, 103) can be changed, is the nut (51, 151) of said bolt (31, 131), **and in that** said change in said position of said second one of said two locking elements (4, 5, 104, 105) with respect to said locking rod (3, 103) along said axis (X) is obtained by screwing or unscrewing said nut (51, 151) and said bolt (31, 131) relative to each other.

4. Clamp (1, 100) according to claim 3, **characterized in that** said head (41, 141) and said nut (51, 151) are prismatic in shape.

5. Clamp (1, 100) according to any one of the preceding claims, **characterized in that** said fine adjustment system (8, 108) comprises an ergonomic knob (9, 109) integrally coupled with one of said two locking elements (4, 5, 104, 105) in such a way as to make it easier for a user to change the relative position between said second one of said two locking elements (4, 5, 104, 105) and said locking rod (3, 103) along said axis (X).

6. Clamp (1) according to any of the preceding claims in combination with claim 1, **characterized in that** said hand lever (6) is C-shaped, during rotation said hand lever (6) being integrally associated, at its free ends (6a, 6b), with both said locking elements (4, 5) of said locking rod (3), so that the rotation of said hand lever (6) sets said two locking elements (4, 5) and said locking rod (3) rotating, said cam system (7a, 7b) being arranged between each free end (6a, 6b) of said hand lever (6) and a corresponding free end (2a, 2b) of said clamping ring (2).

7. Clamp (1) according to claim 6 in combination with claim 5, **characterized in that** said ergonomic knob (9), integrally coupled with one of said two locking elements (4, 5), comprises first locking means (91) configured to cooperate with second locking means (721) defined on said cam system (7a, 7b), said first locking means (91) and said second locking means (721) being configured to integrally associate said ergonomic knob (9) and the corresponding locking element (4, 5) with said hand lever (6) during rotation, when said hand lever (6) is rotated, said first locking means (91) and said second locking means (721) being configured to allow said cam system (7a, 7b) and said hand lever (6) to be disengaged during rotation and to allow said ergonomic knob (9) and the corresponding locking element (4, 5) to rotate, while said hand lever (6) is kept at rest so as to carry out said fine adjustment.

8. Clamp (1) according to any one of claims 6 or 7 in combination with claim 2, **characterized in that** said at least one cam system (7a, 7b) comprises a cam (71) integrally coupled with said free end (2a, 2b) of said clamping ring (2) and a counter cam (72) integrally coupled with the locking element (4, 5) integrally coupled with said free end (6a, 6b) of said hand lever (6) during rotation, said counter cam (72) and said locking element (4, 5) being configured so that their relative position with respect to said hand lever (6) along said axis (X) can be changed, the surfaces of each of the sides (71a, 72a) facing each other of said cam (71) and of said counter cam (72) being inclined in such a way that the relative rotation of said counter cam (72) with respect to said cam (71) causes a change in their total extension along said axis (X) and, consequently, causes said two free ends (2a, 2b) of said clamping ring (2) to be moved closer to or away from each other.

9. Clamp (1) according to claim 8, **characterized in that** said two free ends (6a, 6b) of said hand lever (6) have two through seats (61, 62), said through seats (61, 62) and the outer contours of said counter cams (72) being shaped in such a way that, when each of said counter cams (72) is inserted in the corresponding through seat (61, 62), said hand lever (6) and said counter cams (72) are integral with each other in rotation and at the same time can translate with respect to each other along said axis (X).

10. Clamp (1) according to claim 9, **characterized in that** said through seats (61, 62) have a circular shape and comprise three slits (63) that are undercut in the direction of said axis (X) and angularly distributed along the circumference of said through seats (61, 62), said counter cams (72) having a circular outer contour complementary to the shape of said two through seats (61, 62) and comprising on their outer contour three projections (722) that extend according to extension axes parallel to said axis (X) and are complementary to said slits (63), in such a way that the insertion of each counter cam (72) into the corresponding through seat (61, 62) determines an integral coupling during rotation between said hand lever (6) and said counter cam (72) and at the same time allows said counter cam (72) to translate along said axis (X) with respect to the corresponding through seat (61, 62).

11. Clamp (100) according to any one of the claims from 1 to 5, **characterized in that** during rotation said hand lever (106) is integrally associated with only one of said two locking elements (104, 105) of said locking rod (103), in such a way that the rotation of said hand lever (106) also sets said only one of said two locking elements (104, 105) rotating, the other of said two locking elements (104, 105) being configured to remain at rest during the rotation of said hand lever (106), in such a way as to allow the distance between said two locking elements (104, 105) and, consequently, the distance between said two ends (102a, 102b) of said clamping ring (102) to be changed.

12. Clamp (10) according to claim 10 in combination with claim 5, **characterized in that** said ergonomic knob (109) is integrally coupled with said first one of said two locking elements (104, 105) and said hand lever (106) is integrally coupled with said second one of said two locking elements (104, 105) during rotation, or said ergonomic knob (109) is integrally coupled with said second one of said two locking elements (104, 105) and said hand lever (106) is integrally coupled with said first one of said two locking elements (104, 105) during rotation, said ergonomic knob (109) comprising first locking means (191) that are reversible with respect to second locking means (1721) defined on one of the ends (102a, 102b) of said clamping ring (102), so as to keep at rest the locking element (104, 105) with which said ergonomic knob (109) is associated during the rotation of said hand lever (106), said first locking means (191) and said second locking means (1721) being configured to allow said ergonomic knob (109) to rotate integrally with said locking element (104, 105) with which it is associated, while said hand lever (106) is kept at rest so as to carry out said fine adjustment.
